# FASCICULE DE BREVET EUROPEEN

(11) **EP 0 942 846 B1**
(45) Date de publication et mention de la délivrance du brevet: **17.10.2001**
(21) Numéro de dépôt: 97951296.9
(22) Date de dépôt: 10.12.1997
(51) Int. Cl.: B60P 3/077

(54) **CALE AMOVIBLE POUR L'IMMOBILISATION D'UNE ROUE D'UN VEHICULE SUR UNE STRUCTURE PORTEUSE PERFOREE**
LÖSBARER ARRETIERKEIL ZUM FIXIEREN EINES FAHRZEUGRADES AN EINER PERFORIERTEN TRAGSTRUKTUR
REMOVABLE BLOCK FOR IMMOBILISING A VEHICLE WHEEL ON A PERFORATED CARRYING STRUCTURE

(30) Priorité: 11.12.1996 FR 9615404
(43) Date de publication de la demande: 22.09.1999
(73) Titulaire: Lohr Industrie, 67980 Hangenbieten (FR)
(72) Inventeur: ANDRE, Jean-Luc, F-67210 Obernai (FR); BRION, Serge, F-67370 Stutzheim-Offenheim (FR)
(74) Mandataire: Metz, Paul
(86) Numéro de dépôt international: FR9702257
(87) Numéro de publication internationale: WO9825794

(56) Documents cités:
- DE-A- 4 120 035
- DE-U- 9 215 181
- DE-U- 9 417 804
- FR-A- 1 519 795
- FR-A- 2 725 946

## Description

La présente invention concerne une cale amovible pour l'immobilisation d'une roue d'un véhicule routier sur une structure porteuse perforée du type de celle décrite dans le préambule de la revendication principale.

Il existe déjà différents types de cales adaptables sur les plans porteurs par exemple d'un véhicule routier ou ferroviaire destiné au transport de véhicules routiers notamment de voitures.

On peut citer à cet effet le brevet français n° 2.725.946 au nom du déposant.

La cale décrite dans ce brevet comporte une base d'appui et de verrouillage venant s'immobiliser dans les perforations du plan porteur, et une structure de calage montée pivotante sur la base d'appui entre deux positions, l'une en présentation couchée, parallèle au plan porteur, permettant le passage des véhicules, et l'autre en présentation dressée, perpendiculaire au plan porteur, pour l'immobilisation des véhicules. La cale d'appui du type platine présente en sous-face deux griffes d'immobilisation par lesquelles elle est ancrée sur le plan porteur. Ces griffes d'immobilisation, adaptées pour venir plonger chacune dans une perforation du plan porteur, sont pivotées simultanément en rotation à la façon d'un verrou tournant entre une présentation dans laquelle elles pénètrent ou sont extraites des perforations, et une position dans laquelle elles se bloquent dans ces perforations pour l'immobilisation de la cale sur le plan porteur de l'unité porte-voitures.

Une autre cale est connue par le brevet français n° 2,684,054 au nom de Officina Meccanica di Migliore Livio. Elle comprend deux traverses transversales au plan porteur qui servent d'appui à la roue du véhicule à immobiliser, et deux doigts de blocage par lesquels elle est immobilisée sur le plan porteur. L'un des doigts est pivoté entre une position de déblocage de la cale dans laquelle il pénètre ou est extrait d'une perforation du plan porteur, et une position de blocage pivotée de 90° par rapport à la position de déblocage dans laquelle il se bloque dans la perforation. L'autre doigt de blocage monté en regard à une distance du premier doigt de blocage correspondant à l'intervalle séparant deux perforations est prévu fixe.

On peut encore citer la cale décrite dans le brevet européen n° 0710,584 au nom de la société Kässbohrer. Cette cale est constituée d'une branche transversale d'arrêt à retours latéraux, l'ensemble étant conformé en une seule pièce à partir d'un profilé tubulaire. Elle comporte également deux doigts d'immobilisation pour son ancrage sur le plan porteur, dont l'un est monté à la façon d'un crochet pivotant et l'autre est fixe.

Les cales antérieures décrites succinctement ci-dessus présentent chacune à leurs extrémités au moins un doigt ou une griffe d'immobilisation par lesquelles elles sont ancrées sur le plan porteur. Selon les modes d'exécution envisagés, l'une et l'autre, ou l'une ou l'autre de ces griffes sont pivotées entre une position de libération de la cale dans laquelle elles sont présentées parallèles à l'axe longitudinal d'ouverture d'une perforation du plan porteur, et une position d'immobilisation dans laquelle elles se bloquent dans ces perforations. Cette solution technique a été retenue dans le but d'assurer un maintien fiable de la cale et donc du véhicule transporté sur le plan porteur d'un moyen de transport.

Cette solution antérieure à deux doigts de blocage d'extrémité présente néanmoins plusieurs inconvénients.

Elle rend les opérations de mise en place et d'extraction de la cale difficiles. En effet, lors de la mise en place de la cale sur le plan porteur, chacun des doigts de verrouillage doit être amené en coïncidence de positionnement avec l'ouverture d'une perforation du plan porteur. Cette opération, réalisée manuellement, est rendue difficile et pénible pour l'opérateur par le poids élevé de ce type de cale et par le manque d'accès au verrou situé côté intérieur du plan de chargement c'est-à-dire du côté du véhicule à transporter. Inversement, en phase d'extraction de la cale, les doigts de verrouillage restent fréquemment bloqués dans les perforations. Les opérations d'extraction sont plus difficiles encore lorsque la roue d'un véhicule est en appui de butée contre la structure d'arrêt de la cale. Ces cales antérieures présentent également un prix de revient plus élevé provenant de la fabrication.

La présente invention a pour but de remédier à ces inconvénients.

A cet effet, l'invention se rapporte à une cale amovible pour l'immobilisation d'une roue d'un véhicule sur une structure porteuse perforée, caractérisée en ce qu'elle comporte à l'une seule de ses extrémités un organe de verrouillage par lequel elle est ancrée sur la structure porteuse et en ce que la branche supérieure se poursuit vers le bas jusqu'à la base d'accrochage par un retour coudé à forme arrondie se prolongeant vers le bas pour délimiter une rampe incurvée de guidage vers la partie centrale de la cale.

Les avantages de la présente invention peuvent être énoncés comme suit :
. mise en place et extraction de la cale facilitées ;
. mécanisme unique de verrouillage-déverrouillage de la cale permettant d'effectuer son montage et son ancrage sur la surface porteuse avec grande rapidité et moins de risques d'erreur et de mauvais fonctionnement ;
. pas de duplication du mécanisme de verrouillage-déverrouillage entraînant un poids plus faible et une fabrication plus simple et moins onéreuse et permettant la réduction de la longueur de son corps ;
. la forme de la cale réduit son encombrement et son emprise au sol en particulier, aucune partie agressive ne dépasse du plan vertical passant par la branche supérieure ;
. la cale est plus courte que celles existant actuellement, elle est donc :
   . plus légère
   . plus facile à manipuler et à stocker
   . ne provoque aucune interférence avec les triangles de suspension des voitures à faible garde au sol ;
. le mécanisme unique de verrouillage-déverrouillage est situé côté extérieur du véhicule transporté évitant le problème d'accès sous le véhicule transporté pour la mise en place, le verrouillage et l'extraction de la cale ;
. l'extraction s'effectue par un mouvement dégageant par rapport au pneu ;
. le corps de la cale est formé par un tube lisse en U couché dont le plan défini par les deux branches parallèles est incliné et à surface projetée au sol supérieure à l'encombrement de la base d'accrochage ;
. le tube dont est formé le corps de la cale constitue une bordure lisse non agressive pour les pneus, même lorsque les cales sont rangées fixées sur la bordure le long du plan de chargement ;
. le corps de la cale peut être réalisé avantageusement par simple cintrage d'un tube et la base latérale par forgeage ou par moulage.

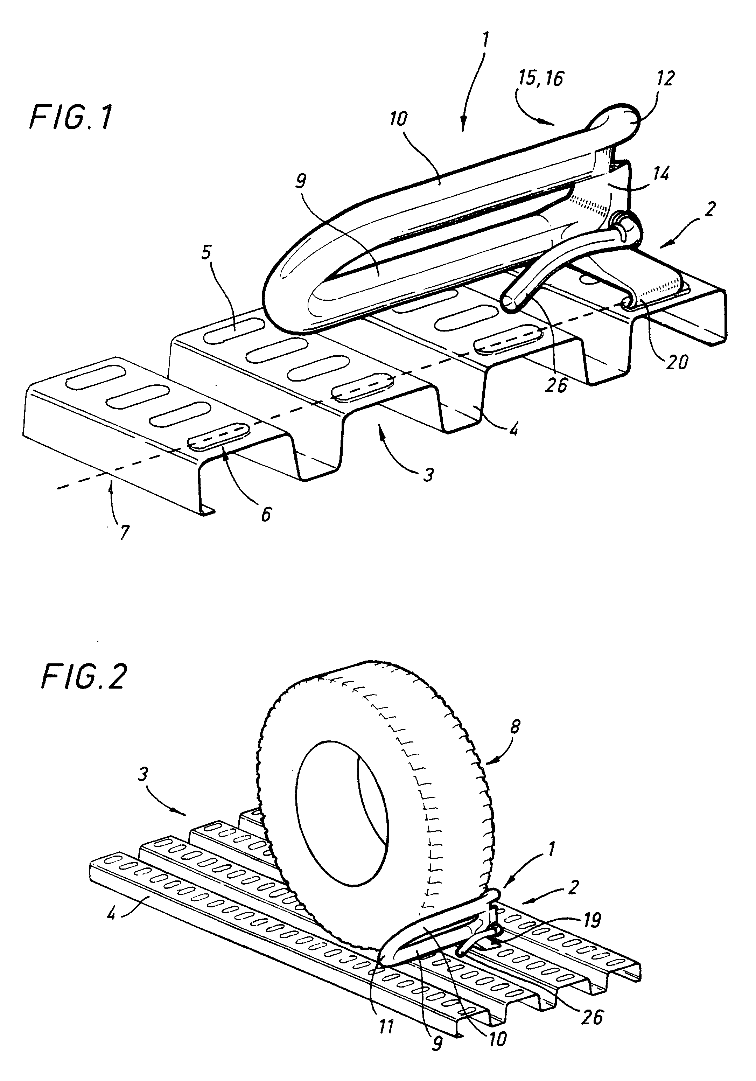

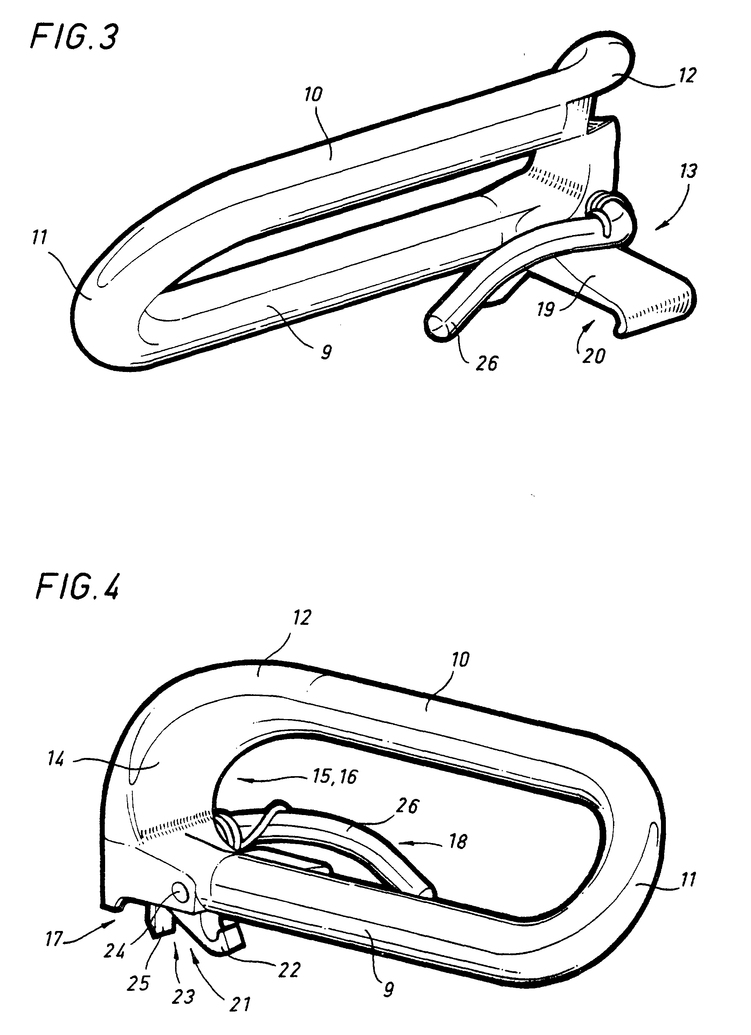

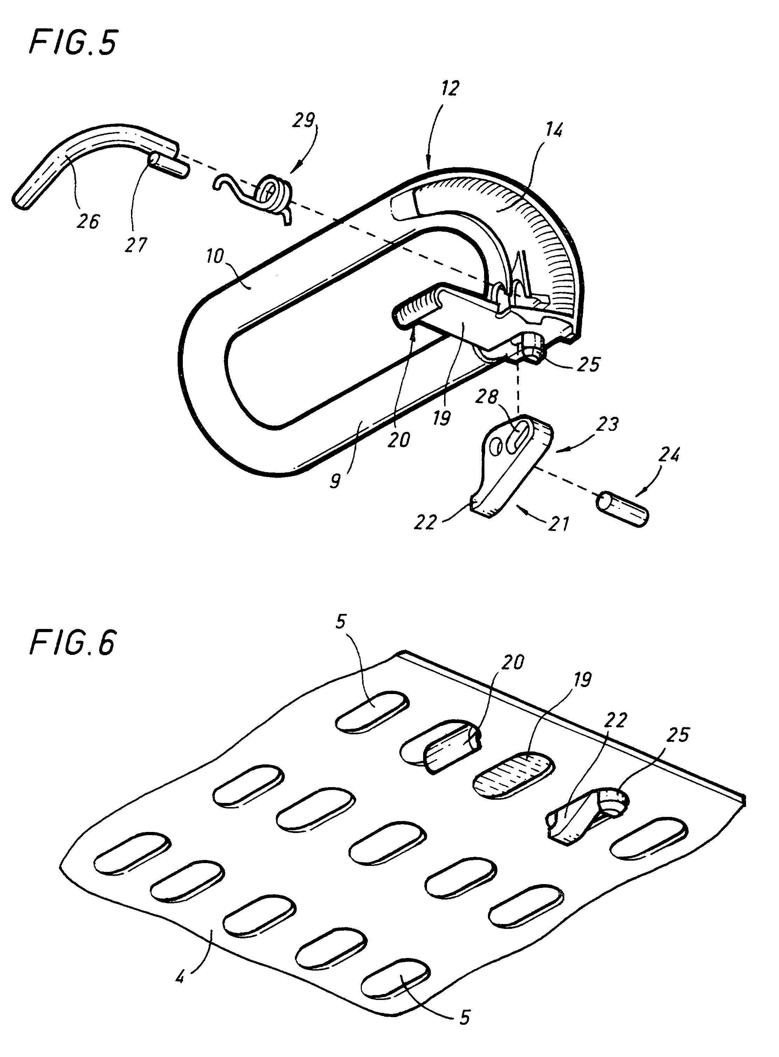

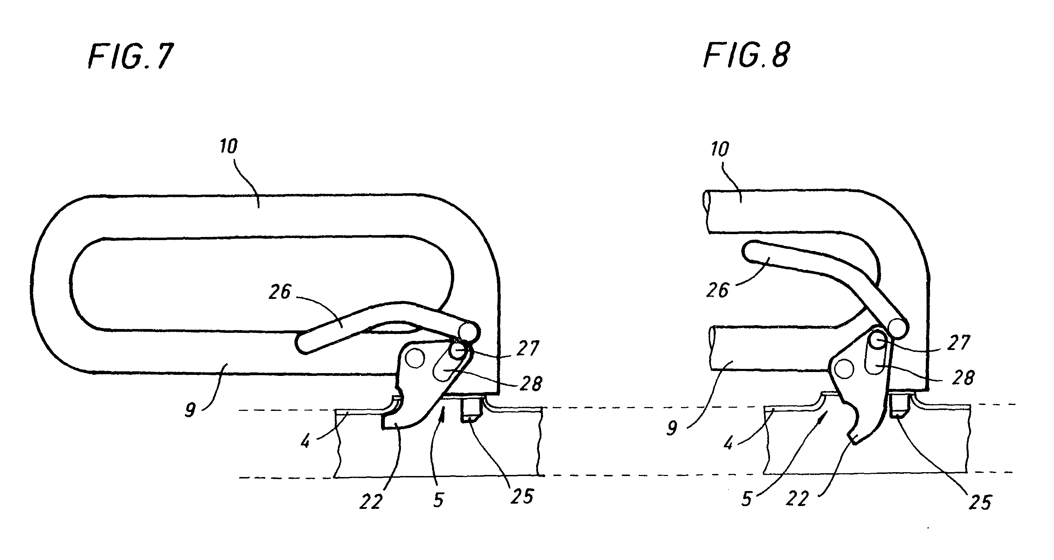

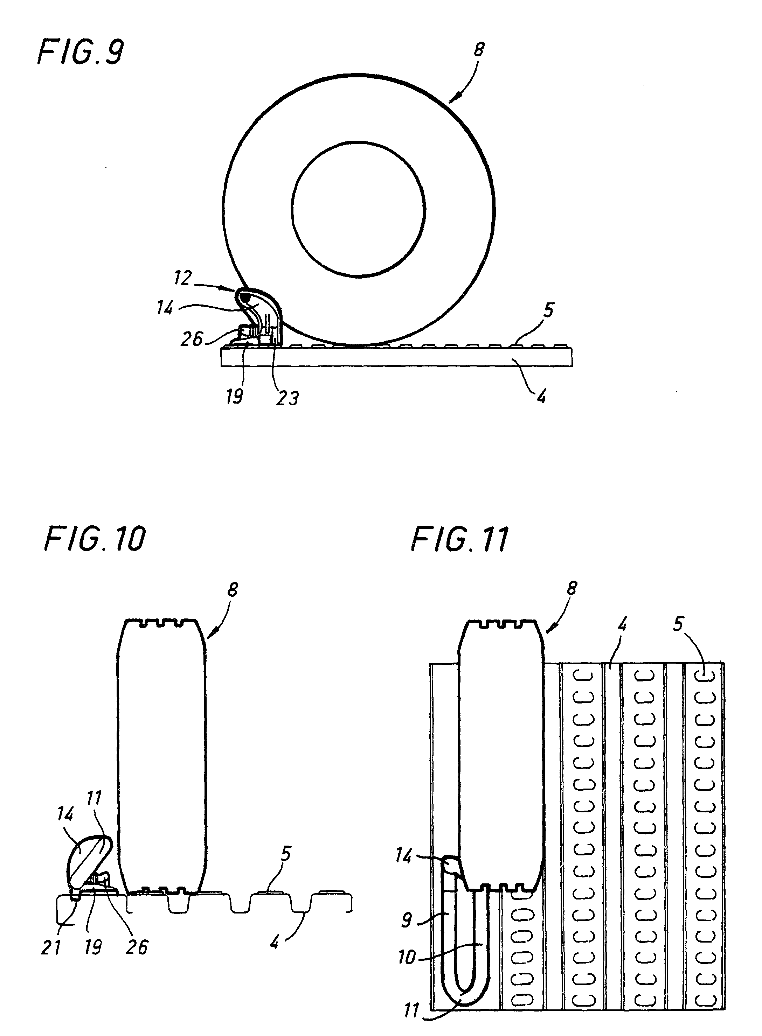

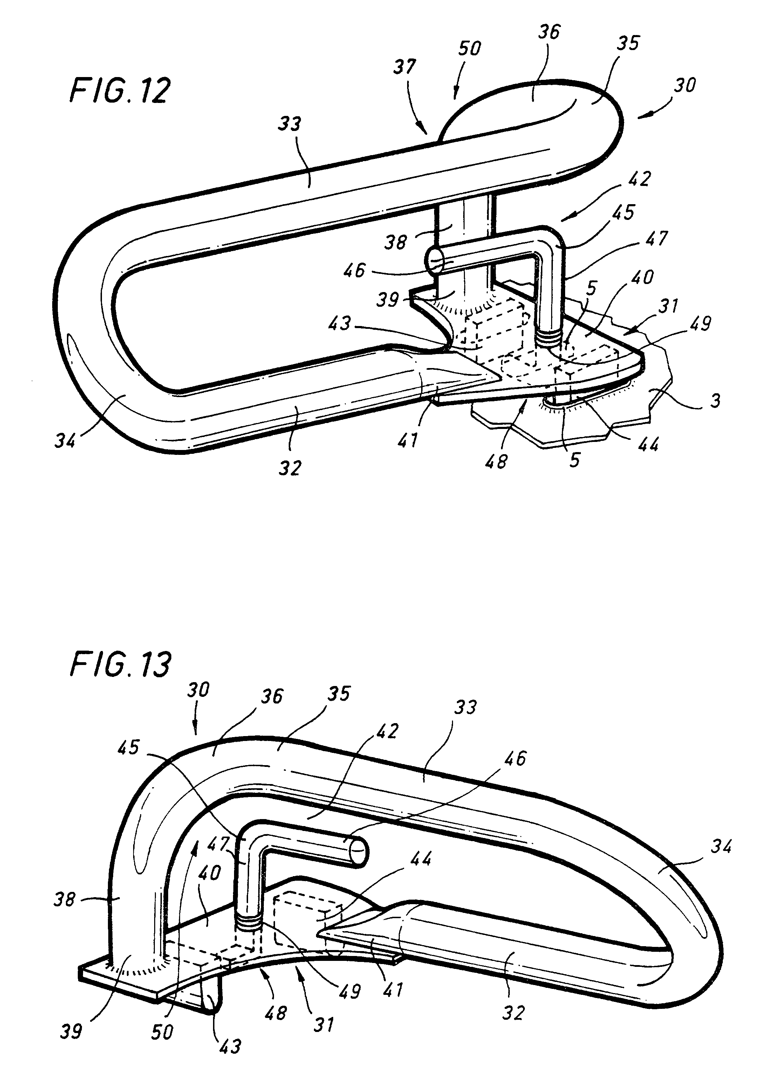

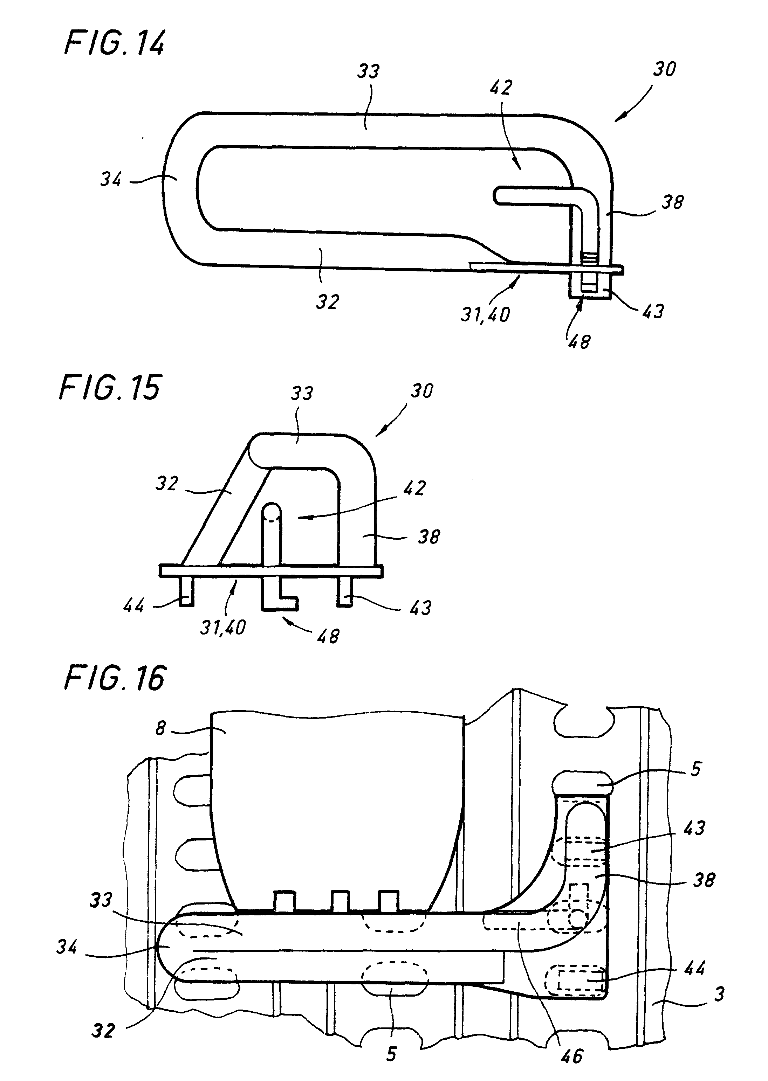

L'invention sera mieux comprise à la lecture de la description qui suit, effectuée sur deux modes de réalisation de la cale en référence au dessin accompagnant sur lequel :
. la figure 1 est une vue en perspective d'un premier mode de réalisation de la cale selon l'invention représentée seule et montée sur une structure porteuse à platelage perforé ;
. la figure 2 est une vue en perspective du premier mode de réalisation sur un platelage perforé immobilisant une roue ;
. la figure 3 est une vue en perspective de biais de l'avant de la cale selon le premier mode ;
. la figure 4 est une vue en perspective de biais de l'arrière de la cale selon le premier mode ;
. la figure 5 est une vue en perspective de dessous montrant les différentes pièces du verrou en éclaté ;
. la figure 6 est une vue de dessous du platelage perforé montrant la griffe, le téton de positionnement et le doigt de verrouillage en prise sur ou dans les perforations ;
. les figures 7 et 8 sont des schémas explicatifs du travail du doigt de verrouillage ;
. la figure 9 est une vue en plan d'une roue appuyant contre la cale ;
. les figures 10 et 11 sont des vues de profil et en plan illustrant les configurations d'une roue par rapport à une cale en position de rangement :
   . les figures 12 et 13 sont des vues en perspective de biais respectivement de l'avant et de l'arrière de la cale selon une variante à trois points d'immobilisation ;
   . la figure 14 est une vue frontale de la cale ci-dessus côté levier de l'organe de verrouillage ;
   . la figure 15 est une vue de profil de la cale ci-dessus côté levier de l'organe de verrouillage ;
   . la figure 16 est une vue en plan de la cale selon la variante représentée sur les figures 12 et 13 avec figuration d'une part d'une partie du platelage sur lequel elle est montée et d'autre part du pneu qu'elle immobilise.

La cale selon l'invention présente un corps transversal allongé 1 monté sur une embase d'immobilisation 2 pour son calage et son immobilisation par exemple par ancrage sur une structure porteuse 3, platelage ou autre, formée de plaques éventuellement ondulées telles que 4 présentant des perforations par exemple oblongues 5 et à bord saillant, disposées en rangées telles que 6 et en lignes telles que 7.

La cale sur laquelle arrive en butée une roue équipée d'un pneu 8 d'un véhicule routier est appelée à être déverrouillée puis désolidarisée de la structure porteuse perforée 3 par la succession d'une simple manoeuvre manuelle sur une poignée ou un levier et d'un mouvement de dégagement.

Selon une variante, elle peut être rabattue en position verticale pour permettre la libération du passage devant la roue précédemment immobilisée par la cale. Cette manoeuvre d'escamotage est un pivotement autour d'un axe parallèle ou perpendiculaire à la structure porteuse jusque dans une position debout ou couché perpendiculaire à celle-ci. La cale peut aussi s'effacer ou être rangée le long du platelage dans la direction de roulage.

Le corps transversal 1 présente une forme allongée particulière à deux branches parallèles contre lesquelles est calé le pneu 8. On distingue une branche inférieure 9 et une branche supérieure 10, décalées dans l'espace dans la direction de roulage et réunies entre elles à l'extrémité libre de la cale par un tronçon incliné de raccordement 11 formant un support de forme générale en U couché pouvant être fabriqué d'une seule pièce par cintrage de tube ou par moulage.

La branche inférieure 9 est disposée suffisamment basse pour prendre appui au moins en un endroit sur la zone inter-perforations. Elle peut être encastrée dans l'espace délimité par les bords longitudinaux en regard des perforations de deux lignes 7 successives.

Le plan incliné délimité par les deux branches est de dimensions et d'inclinaison telles par rapport à l'encombrement de la cale que la surface projetée de celui-ci couvre sensiblement la surface du bloc d'ancrage de la cale et complètement le verrou.

Cette caractéristique permet de faire jouer au corps de la cale le rôle d'une protection pour les organes mécaniques de la cale par rapport au danger que représentent les pneus des voitures circulant à proximité et inversement de protéger les pneus de toute saillie susceptible de les endommager.

Le plan délimité par les deux branches 9 et 10 est incliné montant vers l'avant dans le sens d'approche du pneu laissant le verrou à l'avant de la cale comme on peut le voir sur la figure 2.

A l'autre extrémité de la cale, la branche supérieure 10 se prolonge vers le bas par un retour coudé arrondi 12. Ce coude arrondi 12 se poursuit vers le bas jusqu'à une base d'immobilisation 13 par un évasement incurvé de raccordement 14 le reliant à la base d'accrochage 13 à laquelle est solidarisée à un niveau bas, l'extrémité de la branche inférieure 9. Cette conformation délimite un espace de guidage en creux 15 s'étendant entre la base d'accrochage 13 et la naissance du coude arrondi 12. L'espace de guidage en creux 15 est incurvé progressivement et gauche pour constituer une rampe latérale incurvée 16 vers la partie centrale de la cale.

La rampe incurvée latérale 16 de l'espace de guidage 15 permet de guider sans l'agresser le pneu 8 vers la partie centrale de la cale pour le mettre en contact d'immobilisation avec au moins la branche supérieure 10 dans le cas d'une orientation initiale du pneu non parfaitement en ligne avec la cale.

La base d'immobilisation 13 se compose d'un verrou 17 et de son mécanisme de manoeuvre 18. Le verrou 17 comporte une platine 19 dont chaque extrémité longitudinale présente une griffe d'accrochage venant en prise d'ancrage dans une des perforations oblongues adjacentes 5 de la structure porteuse perforée 3.

Une première griffe 20 qui est fixe par rapport à la platine 19 constitue la prolongation de l'une des extrémités longitudinales de la platine. Elle est située du côté avant de la platine 19, c'est-à-dire celui se trouvant au-delà du pneu. Elle vient s'accrocher dans la perforation 5 adjacente ou immédiatement voisine par un mouvement longitudinal à la structure porteuse 3, mais transversal par rapport aux lignes 7 de perforations 5, sur le grand côté le plus proche du bord de la perforation adjacente. Cette griffe fixe 20 constitue le moyen fixe d'accrochage du verrou.

Cette première griffe 20 est située du coté de la projection de la branche supérieure 10.

Une deuxième griffe affecte la forme d'un doigt de verrouillage 21 à extrémité en crochet 22 conformé dans une pièce de verrouillage 23. Celle-ci est mobile en basculement autour d'un axe-goupille 24 monté transversalement au niveau de l'extrémité longitudinale opposée de la platine d'accrochage 19. Ce doigt mobile de verrouillage 21 pivote dans une direction d'accrochage parallèle aux lignes 7 de perforation, c'est-à-dire croisée avec la direction d'accrochage de la première griffe fixe 20.

Le doigt de verrouillage 21 est complété par un téton de positionnement 25 fixe perpendiculaire à la platine d'accrochage 19 et destiné à venir s'enfoncer dans la perforation utilisée pour le doigt de verrouillage 21 afin de procurer une immobilisation ou un centrage primaire. Cette immobilisation sera complétée par le verrouillage. A cet effet, le téton fixe 25 est situé à une distance appropriée de la perforation utilisée par la griffe fixe.

Le doigt basculant de verrouillage 21 est actionné par un mécanisme de pivotement se terminant par un levier de manoeuvre formant poignée 26.

Ce mécanisme d'actionnement comporte la poignée 26 qui est montée sur un axe de pivotement portant ou actionnant un bout d'axe 27 parallèle à son axe de pivotement et coopérant avec un évidement à rôle de came 28 formée dans la partie supérieure de la pièce 23 du doigt de verrouillage.

L'abaissement de la poignée est ainsi transformé en un basculement du doigt de verrouillage 21 en vue de la prise de verrouillage de la cale. Ce doigt de verrouillage 21, mobile par basculement, vient se plaquer en appui à l'état rabattu contre la sous-face de la plaque perforée au niveau de la perforation 5 adjacente réalisant ainsi un véritable pincement qui, associé au maintien d'accrochage longitudinal réalisé par la griffe fixe 20 et au téton de positionnement 25 assure un verrouillage complet et résistant.

Un ressort de torsion 29 monté sur l'axe du mécanisme d'actionnement assure le maintien en position verrouillée.

L'efficacité de ce verrouillage est suffisante pour se dispenser d'un deuxième verrou qui serait disposé en dessous de l'extrémité opposée de la cale comme dans le cas des cales antérieures.

Le corps transversal d'immobilisation 1 est prévu de longueur suffisante pour recevoir les pneus les plus larges dans une catégorie de véhicules, par exemple des voitures de tourisme. Cette caractéristique confère à la cale la dimension longitudinale la plus courte possible. Pour les véhicules d'une même catégorie, présentant des largeurs de voie très réduites ou exceptionnellement grandes, il suffit de déplacer la cale d'un ou de plusieurs intervalles existant entre les perforations du platelage.

La variante à trois points d'immobilisation représentée sur les figures 12 à 16 se distingue de celle décrite ci-dessus par les caractéristiques générales suivantes.

La platine de fixation est plus étendue dans le sens du mouvement du pneu, la branche inférieure du corps transversal de la cale est placée en avant par rapport à l'approche du pneu à caler et la fixation au platelage est réalisée par un verrou, par exemple central, du type quart de tour complété par deux éléments de centrage-immobilisation.

Cette variante se compose des mêmes moyens généraux que la version précédemment décrite.

Elle présente un corps transversal allongé 30 monté sur une base d'immobilisation 31 se développant longitudinalement pour sa solidarisation par fixation à la structure porteuse 3 formant un platelage constitué par exemple de plaques 4 à perforations oblongues 5 et à bord saillant, disposées en rangées telles que 6 et en lignes telles que 7.

La cale sur laquelle arrive en butée une roue équipée d'un pneu 8 d'un véhicule routier est appelée à être déverrouillée puis désolidarisée de la structure porteuse perforée 3 par la succession d'une simple manoeuvre manuelle sur une poignée ou un levier et d'un mouvement de dégagement.

Selon une variante, le corps de la cale peut être rabattu en position verticale de dégagement perpendiculaire au plan du platelage ou effacé pour son rangement le long du platelage parallèlement à la direction de roulage.

Le corps transversal 30 de la cale présente une forme allongée particulière. Il est formé de deux branches parallèles contre une desquelles est calé le pneu 8. On distingue une branche inférieure 32 et une branche supérieure 33, décalées dans l'espace et réunies entre elles à l'extrémité libre de la cale par un tronçon incliné de raccordement 34. L'ensemble formant un support de forme générale en U couché peut être fabriqué d'une seule pièce par cintrage d'un tube, par forgeage ou par moulage.

L'extrémité libre de la branche supérieure 33 se prolonge vers l'arrière par un coude 35 suivi d'un tronçon 36 formant avec la branche supérieure 33 un espace de guidage 37 pour le pneu 8. Le tronçon 36 est coudé en extrémité et se prolonge vers le bas selon un tronçon 38. L'extrémité libre 39 du tronçon 38 est solidarisée à une platine de fixation 40 formant avec les moyens de centrage-immobilisation la base d'immobilisation 31.

L'extrémité libre 41 de la branche inférieure 32 est fermée et solidarisée à l'autre extrémité de la platine de fixation 40 qui constitue la liaison mécanique entre les deux autres extrémités des branches inférieure 32 et supérieure 33.

La platine de fixation 40 est plus longue que celle de la version représentée sur les figures 1 à 11. Elle comporte un moyen par exemple central de verrouillage 42 séparant deux structures de centrage-immobilisation sous la forme de deux blocs 43 et 44 destinés à traverser deux ouvertures du platelage.

Les blocs 43 et 44 peuvent présenter une section approximativement aux formes et dimensions des ouvertures du platelage, par exemple légèrement inférieures aux ouvertures pour assurer une immobilisation complémentaire ou de forme et de dimensions différentes pour ne constituer que de simples pions de centrage-immobilisation destinés à procurer une immobilisation primaire de la cale.

De façon plus générale, le verrou 42 peut être disposé à n'importe quel endroit par rapport aux deux structures de centrage-immobilisation, par exemple à l'une ou l'autre perforation d'extrémité couverte par la platine de fixation 40.

Par ailleurs, une des structures de centrage-immobilisation peut être intégrée à côté du verrou 42 alors que l'autre est distincte dans une perforation adjacente ou immédiatement voisine.

Le verrou 42, par exemple central, présente un levier coudé de manoeuvre 45 à branche supérieure horizontale 46 et à branche montante 47. Il est monté pivotant sur la platine de fixation 40. La branche montante 47 traverse la platine 40 et se prolonge vers le bas par une extrémité coudée à patte d'appui 48 dirigée perpendiculairement à la branche supérieure horizontale 46. L'ensemble est monté en rappel élastique vers le haut par un ressort de compression 49 s'étendant par exemple entre deux butées autour de l'extrémité inférieure de la branche montante 47. Ce ressort a pour but de garder plaquée la patte d'appui 48 contre la sous face du platelage au niveau de l'ouverture traversée par ce verrou.

Le plan délimité par les deux branches inférieure 32 et supérieure 33 du corps transversal 31 est incliné descendant vers l'avant dans le sens d'approche du pneu 8 laissant la branche supérieure 46 du levier de manoeuvre du verrou 42 à l'abri en position fermée approximativement sous la branche supérieure 33.

Le tronçon 36 et le début de la branche supérieure 33 délimitant l'espace de guidage 37 forment une rampe incurvée latérale 50 qui permet de guider sans l'agresser le pneu 8 vers la partie centrale de la cale pour le mettre en contact d'immobilisation avec la branche supérieure 33 dans le cas d'une orientation initiale non parfaitement en ligne avec la cale.

Cette variante assure à la cale une meilleure stabilité en raison de la plus grande étendue longitudinale de la platine de fixation 40.

## Revendications

1. Cale amovible pour l'immobilisation par son pneu (8) d'une roue d'un véhicule routier sur une structure porteuse perforée (3), cale dont le corps transversal à la ligne de roulage est immobilisé sur les perforations de la structure porteuse (3)
**caractérisée en ce que** son corps transversal (1) ou (30) est constitué d'une branche inférieure (9 ou 32) et une branche supérieure (10) ou (33) parallèles et décalées entre elles dans l'espace et dans la direction de roulage et réunies à une extrémité du corps (1) ou (30) de la cale par une tronçon incliné de raccordement (11) ou (34) et **en ce que** le corps (1) ou (30) présente à son autre extrémité une base d'immobilisation (13) ou (31) comportant un organe de verrouillage par lequel la cale est fixée sur la structure porteuse (3) en utilisant une perforation de celle-ci, organe de verrouillage complété par au moins un élément de centrage-immobilisation dans au moins une des perforations voisines et **en ce que** la branche supérieure (10) ou (33) se poursuit vers le bas jusqu'à la base d'immobilisation (13) ou (31) par une portion coudée.

2. Cale selon la revendication 1 **caractérisée en ce que** le corps (1) ou (30) est un corps tubulaire.

3. Cale selon la revendication 1 **caractérisée en ce que** le décalage dans l'espace et dans la direction de roulage entre les branches (32) et (33) du corps (30) de la cale est au-delà du pneu (8).

4. Cale selon l'une quelconque des revendications précédentes **caractérisée en ce que** l'extrémité libre de la branche supérieure (33) se prolonge vers l'arrière par un coude (35) suivi d'un tronçon (36) formant avec la branche supérieure (33) un espace de guidage (37) pour le pneu (8), **en ce que** le tronçon (36) est coudé en extrémité et se prolonge vers le bas selon un tronçon (38), l'extrémité libre (39) du tronçon (38) étant solidarisée à une platine de fixation (40) formant avec des moyens de fixation et des moyens de centrage-immobilisation la base d'immobilisation (31) et **en ce que** l'extrémité libre (41) de la branche inférieure (32) est solidarisée à l'autre extrémité de la platine de fixation (40) qui constitue la seule liaison mécanique entre les deux autres extrémités des branches inférieure (32) et supérieure (33).

5. Cale selon la revendication 1 **caractérisée en ce que** l'organe de verrouillage est un verrou tournant (42) dont l'extrémité inférieure vient se placer dans la position verrouillée du verrou (42) transversalement à l'ouverture adjacente du platelage en dessous de celle-ci.

6. Cale selon la revendication précédente **caractérisée en ce que** le verrou (42) comporte un levier coudé présentant une branche montante (47) et une branche supérieure (46) coudées entre elles, dont la branche montante (47) se prolonge vers le bas par une extrémité coudée dirigée perpendiculairement à la branche supérieure (46), et traversant une ouverture du platelage pour se placer en position de blocage transversalement à celle-ci et former une patte d'appui (48) venant en contact avec la sous face de l'ouverture, l'ensemble étant monté en rappel élastique vers le haut par un ressort (49).

7. Cale selon l'une quelconque des revendications précédentes 1, 5 ou 6 **caractérisée en ce que** l'organe de verrouillage (42) est situé entre deux structures de centrage-immobilisation solidaires de la platine de fixation (40) qui viennent s'engager chacune dans une des ouvertures voisines de celle utilisée pour le verrou (42).

8. Cale selon l'une quelconque des revendications précédentes 1, 5 à 7 **caractérisée en ce que** l'organe de verrouillage (42) est situé dans une position quelconque par rapport aux deux structures de centrage-immobilisation de la platine de fixation (40) qui viennent s'engager dans des ouvertures de la structure porteuse (3).

9. Cale selon l'une quelconque des revendications précédentes 1, 5 à 8 **caractérisée en ce que** l'une des structures de centrage est indépendante du verrou (42) alors que l'autre est intégrée à côté du verrou (42).

10. Cale selon l'une quelconque des revendications précédentes 1, 5 à 9 **caractérisée en ce que** les structures de centrage-immobilisation de la platine de fixation (40) viennent s'engager chacune dans une ouverture immédiatement voisine de celle utilisée pour le verrou (42).

11. Cale selon l'une des revendications précédentes de 5 à 10 **caractérisée en ce que** les structures de centrage-immobilisation solidaires de la platine de fixation (40) sont des blocs (43) et (44) de forme de section transversale voisine de celle de l'ouverture et de dimension inférieure à celle-ci.

12. Cale selon l'une quelconques des revendications 7 à 11 **caractérisée en ce que** les blocs (43) et (44) formant les structures de centrage-immobilisation solidaires de la platine de fixation (40) sont de section transversale et de forme différentes de celles des ouvertures pour ne constituer que de simples pions de centrage-immobilisation destinés à procurer une immobilisation primaire de la cale.

13. Cale selon l'une quelconque des revendications 1 et 5 à 12 **caractérisée en ce que** la branche supérieure (46) du verrou (42) vient s'abriter en position fermée du verrou (42) sous la branche supérieure (33).

14. Cale selon la revendication 1 **caractérisée en ce que** le décalage dans l'espace et dans la direction de roulage entre les branches (9) et (10) du corps (1) de la cale est en deçà du pneu (8).

15. Cale selon la revendication 1 **caractérisée en ce que** la portion coudée est un retour coudé (12) de forme arrondie.

16. Cale selon les revendications 1, 14 ou 15 **caractérisée en ce que** l'extrémité de la branche supérieure (10) se poursuivant vers le bas par le retour coudé (12) de forme arrondie se prolonge par un évasement incurvé de raccordement (14) le reliant à la base d'immobilisation (13), cette conformation délimitant un rampe latérale incurvée (16) servant de guide au pneu pour le ramener vers le centre de la cale.

17. Cale selon la revendication précédente **caractérisée en ce que** les branches inférieure (9) et supérieure (10) sont réunies entre elles pour former une pièce en forme de U couché délimitant un plan incliné dont la projection recouvre sensiblement la surface représentée par les organes mécaniques de la cale.

18. Cale selon l'une quelconque des revendications 1, 14 à 17 **caractérisée en ce que** la base d'immobilisation (13) comporte à l'une de ses extrémités une griffe fixe (20) venant s'accrocher dans la perforation adjacente du platelage et est reliée par son autre extrémité à un doigt de verrouillage (21) mobile en basculement, doublé par un téton fixe de positionnement (25), ces deux derniers coopérant avec la perforation adjacente en vue d'une immobilisation latérale et longitudinale suivie d'un verrouillage vertical.

19. Cale selon la revendication précédente **caractérisée en ce que** les directions d'accrochage de la griffe fixe (20) et du doigt de verrouillage (21) sont croisées.

20. Cale selon la revendication précédente **caractérisée en ce que** les directions d'accrochage de la griffe fixe (20) et du doigt de verrouillage (21) sont respectivement longitudinale et transversale par rapport à la structure porteuse (3).

21. Cale selon l'une quelconque des revendications 18 à 20 **caractérisée en ce que** la griffe fixe (20) est située du coté de la projection de la branche supérieure 10.

22. Cale selon la revendication 1 **caractérisée en ce que** son corps transversal d'immobilisation (1) ou (30) est monté pivotant sur la base d'immobilisation (13) ou (31) pour être escamoté dans une position debout perpendiculaire au plan de la structure porteuse (3).

23. Cale selon la revendication 1 **caractérisée en ce que** son corps transversal d'immobilisation (1) ou (30) est monté pivotant sur la base d'immobilisation (13) ou (31) pour être effacé dans une position de rangement parallèle à la direction de roulage le long du plan de la structure porteuse (3).

## Patentansprüche

1. Lösbarer Keil zum Festsetzen eines Rades eines Straßenfahrzeugs über dessen Reifen (8) an einer perforierten Tragstruktur (3), wobei der quer zur Rollrichtung verlaufende Körper des Keils an der Perforierung der Tragstruktur (3) festsetzbar ist, **dadurch gekennzeichnet, daß** sein quer verlaufender Körper (1, 30) von einem unteren Schenkel (9, 32) und einem oberen Schenkel (10, 33) gebildet ist, die parallel und räumlich sowie in Rollrichtung versetzt zueinander angeordnet und an einem Ende des Körpers (1, 30) des Keils durch ein geneigtes Verbindungsstück (11, 34) verbunden sind, daß der Körper (1, 30) an seinem anderen Ende einen Festsetzfuß (13, 31) aufweist, welcher ein Riegelorgan umfaßt, mittels dessen der Keil an der Tragstruktur (3) unter Nutzung einer Perforierung derselben fixiert ist, wobei das Riegelorgan durch wenigstens ein Zentrier- und Festsetzelement in wenigstens einer der benachbarten Perforierungen ergänzt ist, und daß sich der obere Schenkel (10, 33) mit einem abgebogenen Abschnitt nach unten bis zu dem Festsetzfuß (13, 31) erstreckt.

2. Keil nach Anspruch 1, **dadurch gekennzeichnet, daß** der Körper (1, 30) ein Rohrkörper ist.

3. Keil nach Anspruch 1, **dadurch gekennzeichnet, daß** der räumliche Versatz und derjenige in Rollrichtung zwischen den Schenkeln (32, 33) des Körpers (30) des Keils sich jenseits des Reifens (8) befindet.

4. Keil nach einem der vorangehenden Ansprüche, **dadurch gekennzeichnet, daß** der obere Schenkel (33) nach hinten durch eine Abbiegung (35) verlängert ist, an welche sich ein Abschnitt (36) anschließt, der mit dem oberen Schenkel (33) einen Führungsraum (37) für den Reifen (8) bildet, daß der Abschnitt (36) endseitig abgebogen ist und sich nach unten ein Abschnitt (38) anschließt, wobei das freie Ende (39) des Abschnitts (38) mit einer Fixierplatte (40) verbunden ist, welche mit Befestigungsmitteln und Zentrier- und Festsetzmitteln den Festsetzfuß (31) bildet, und daß das freie Ende (41) des unteren Schenkels (32) mit dem anderen Ende der Fixierplatte (40) verbunden ist, welche die einzige mechanische Verbindung zwischen den beiden anderen Enden des unteren (32) und des oberen Schenkels (33) bildet.

5. Keil nach Anspruch 1, **dadurch gekennzeichnet, daß** das Riegelorgan ein Schwenkriegel (42) ist, dessen unteres Ende in der verriegelten Position des Schwenkriegels (42) quer zu der benachbarten Öffnung des Bodenbelags unterhalb derselben angeordnet ist.

6. Keil nach dem vorangehenden Anspruch, **dadurch gekennzeichnet, daß** der Schwenkriegel (42) einen Winkelhebel mit einem aufrechten Arm (47) und einen oberen Arm (46) aufweist, die winklig zueinander sind, wobei sich der aufrechte Arm (47) durch ein senkrecht zu dem oberen Arm (46) angeordnetes abgebogenes Ende nach unten verlängert und eine Öffnung in dem Bodenbelag durchsetzt, so daß es in der verriegelten Position quer zu derselben angeordnet ist und eine mit der Unterseite der Öffnung in Kontakt stehende Halteklaue (48) bildet, wobei die Einheit durch eine Feder (49) elastisch nach oben belastet ist.

7. Keil nach einem der vorangehenden Ansprüche 1, 5 oder 6, **dadurch gekennzeichnet, daß** das Riegelorgan (42) zwischen zwei mit der Fixierplatte (40) verbundenen Zentrier- und Festsetzstrukturen angeordnet ist, die jeweils in eine der von dem Schwenkriegel (42) durchsetzten Öffnung benachbarte Öffnung eingreifen.

8. Keil nach einem der vorangehenden Ansprüche 1, 5 bis 7, **dadurch gekennzeichnet, daß** das Riegelorgan (42) in einer beliebigen Position bezüglich der beiden Zentrier- und Festsetzstrukturen der Fixierplatte (40) angeordnet ist, welche in die Öffnungen der Tragstruktur (3) eingreifen.

9. Keil nach einem der vorangehenden Ansprüche 1, 5 bis 8, **dadurch gekennzeichnet, daß** eine der Zentrierstrukturen von dem Schwenkriegel (42) unabhängig ist, während die andere seitlich des Schwenkriegels (42) integriert ist.

10. Keil nach einem der vorangehenden Ansprüche 1, 5 bis 9, **dadurch gekennzeichnet, daß** die Zentrier- und Festsetzstrukturen der Fixierplatte (40) jeweils in eine der von dem Schwenkriegel (42) durchsetzten Öffnung unmittelbar benachbarte Öffnung eingreifen.

11. Keil nach einem der vorangehenden Ansprüche 5 bis 10, **dadurch gekennzeichnet, daß** die mit der Fixierplatte (40) verbundenen Zentrier- und Festsetzstrukturen Blöcke (43, 44) mit einem Querschnitt ähnlich dem der Öffnungen aber mit geringeren Abmessungen als dieser sind.

12. Keil nach einem der Ansprüche 7 bis 11, **dadurch gekennzeichnet, daß** die die mit der Fixierplatte (40) verbundenen Zentrier- und Festsetzstrukturen bildenden Blöcke (43, 44) von anderem Querschnitt und anderer Form wie dem/der der Öffnungen sind, um lediglich einfache Zentrier- und Festsetzstifte zum Vorfixieren des Keils zu bilden.

13. Keil nach einem der Ansprüche 1, 5 bis 12, **dadurch gekennzeichnet, daß** der obere Arm (46) des Schwenkriegels (42) in der Schließposition des Schwenkriegels (42) von dem oberen Schenkel (33) überdeckt ist.

14. Keil nach Anspruch 1, **dadurch gekennzeichnet, daß** der räumliche Versatz und derjenige in Rollrichtung zwischen den Schenkeln (9, 10) des Körpers (1) des Keils diesseits des Reifens (8) angeordnet ist.

15. Keil nach Anspruch 1, **dadurch gekennzeichnet, daß** der abgebogene Abschnitt ein abgerundeter Abbug (12) ist.

16. Keil nach einem der Ansprüche 1, 14 oder 15, **dadurch gekennzeichnet, daß** sich der abgerundete Abbug (12) an das Ende des oberen Schenkels (10) nach unten anschließt und durch eine trompetenförmige Aufweitung (14) verlängert ist, über welche es mit dem Festsetzfuß (13) verbunden ist, wobei diese Formgebung eine bogenförmige seitliche Rampe (16) begrenzt, welche als Führung für den Reifen dient, um ihn in Richtung des Zentrums des Keils zu bringen.

17. Keil nach dem vorangehenden Anspruch, **dadurch gekennzeichnet, daß** der untere (9) und der obere Schenkel (10) unter Bildung eines liegenden U-Stücks miteinander verbunden sind, das eine geneigte Ebene begrenzt, deren Projektion die von den mechanischen Bauteilen des Keils gebildete Fläche im wesentlichen abdeckt.

18. Keil nach einem der Ansprüche 1, 14 bis 17, **dadurch gekennzeichnet, daß** der Festsetzfuß (13) an einem seiner Enden eine feste Klaue (20) aufweist, die sich in der ihnen nahen Perforierung des Bodenbelags verhakt, und an seinem anderen Ende mit einem schwenkbaren Rastfinger (21) verbunden ist, welchem ein stationärer Positionieransatz (25) zugeordnet ist, wobei die beiden letztgenannten mit der ihnen nahen Perforierung zusammenwirken, um ein Längs- und Querfestsetzen gefolgt von einem senkrechten Verriegeln zu gewährleisten.

19. Keil nach dem vorangehenden Anspruch, **dadurch gekennzeichnet, daß** die Richtungen des Verhakens der festen Klaue (20) und des Rastfingers (21) überkreuz verlaufen.

20. Keil nach dem vorangehenden Anspruch, **dadurch gekennzeichnet, daß** die Richtungen des Verhakens der festen Klaue (20) und des Rastfingers (21) bezüglich der Tragstruktur (3) jeweils längs bzw. quer verlaufen.

21. Keil nach einem der Ansprüche 18 bis 20, **dadurch gekennzeichnet, daß** die feste Klaue (20) seitwärts der Projektion des oberen Schenkels (10) angeordnet ist.

22. Keil nach Anspruch 1, **dadurch gekennzeichnet, daß** sein quer verlaufender festsetzbarer Körper (1, 30) schwenkbar an dem Festsetzfuß (13, 31) angeordnet ist, um ihn in eine aufrechte Position senkrecht zur Ebene der Tragstruktur (3) zu klappen.

23. Keil nach Anspruch 1, **dadurch gekennzeichnet, daß** sein quer verlaufender festsetzbarer Körper (1, 30) schwenkbar an dem Festsetzfuß (13, 31) angeordnet ist, um ihn in eine Zufahrtposition parallel zur Rollrichtung entlang der Tragstruktur (3) rückzustellen.

## Claims

1. A removable block for immobilizing the tire (8) of a vehicle wheel on a perforated carrying structure (3), which block has a body that is transverse to the line of movement and which is immobilized on the perforations of the carrying structure (3), **characterized in that** the transverse body (1) or (30) of the block consists of a lower branch (9) or (32) and an upper branch (10) or (33), parallel and spatially offset from each other in the direction of movement and joined at one end of the body (1) or (30) of the block by an inclined connection section (11) or (34); and **in that** the body (1) or (30) has at the other end an immobilizing base (13) or (31) comprising a locking means for attaching the block to the supporting structure (3) using one of its perforations, said locking means being completed by at least one centering-immobilizing element in at least one of its nearby perforations; and **in that** the upper branch (10) or (33) extends downward to the immobilizing base (13) or (31) into an angled portion.

2. A block according to claim 1 **characterized in that** the body (1) or (30) is a tubular body.

3. A block according to claim 1 **characterized in that** the spatially offset area in the direction of movement between the branches (32) and (33) of the body (30) of the block is located beyond the tire (8).

4. A block according to any one of the preceding claims, **characterized in that** the unattached end of the upper branch (33) extends toward the rear in an angled portion (35), followed by a segment (36) forming with the upper branch (33) a guide space (37) for the tire (8), and **in that** the segment (36) has an angled extremity and extends downward into a segment (38), with the free end (39) of the segment (38) being integral with a fastening plate (40) which , together with attachment means and centering-immobilizing means, forms the immobilizing base (31); and **in that** unattached end (41) of the lower branch (32) is integral with the other extremity of the fastening plate (40), which constitutes the only mechanical connection between the two other extremities of the lower branch (32) and the upper branch (33).

5. A block according to claim 1, **characterized in that** the locking means is a turning lock (42), the lower extremity of which is positioned to lock the lock (42) transversely in relation to the adjacent opening of the plate below the opening.

6. A block according to the preceding claim **characterized in that** the lock (42) comprises an angled lever with an upright branch (47) and an upper branch (46) which are angled, with the upright branch (47) extending downward into an angled extremity perpendicular to the upper branch (46), and traversing an opening in the plate to position the block transversely in relation to the opening and to form a foot (48) contacting the lower surface of the opening, with the upper portion of said unit being attached by a spring (40).

7. A block according to any one of preceding claims 1, 5 or 6 **characterized in that** the locking element (42) is located between two centering-immobilizing structures integral with the fastening plate (40), each of which engages one of the nearby openings in the plate used for the lock (42).

8. A block according to any one of preceding claims 1 or 5 through 7 **characterized in that** the locking means (42) may be located in any position in relation to the two centering-immobilizing structures of fastening plate 40 which engage within the openings of the carrying structure (3).

9. A block according to any one of preceding claims 1 or 5 through 8, **characterized in that** one of the centering structures is independent of the lock (42), while the other is integrated within the lock (42).

10. A block according to any one of preceding claims 1 or 5 through 9, **characterized in that** the centering-immobilizing structures on the fastening plate (40) each engage within an opening immediately adjacent the opening used for the lock (42).

11. A block according to one of preceding claims 5 through 10 **characterized in that** the centering-immobilizing structures integral with the fastening plate (40) are blocks (43) and (44) which have a transverse section and shape similar to the opening, but of smaller dimension that the opening.

12. A block according to any one of claims 7 through 11 **characterized in that** the blocks (43) and (44) forming the centering-immobilizing structures integral with the fastening plate (40) have a transverse section and shape different from the openings, so that they constitute simple centering-immobilizing guides for the used for the primary immobilizing of the block.

13. A block according to any one of claims 1 or 5 through 12 **characterized in that** when the lock (42) is closed, the upper branch (46) of the lock (42) is covered by the upper branch (33).

14. A block according to claim 1 **characterized in that** the spatially offset area between the branches (9) and (10) of the body (1) of the block in the direction of movement is located on the side of the tire (8).

15. A block according to claim 1 **characterized in that** the angled portion is an angled return (12) rounded in shape.

16. A block according to claims 1, 14 or 15 **characterized in that** the extremity of the upper branch (10) extending downward into a rounded, angled return (12) extends into a concave connecting zone (14) joining it to the immobilizing base (13), said zone defining a concave, curved ramp (16) serving as a guide for moving the tire toward the center of the block.

17. A block according to the preceding claim **characterized in that** the lower branches (9) and the upper branches (10) are interconnected to form a flattened U-shaped piece defining an inclined plane, the projecting portion of which essentially covers the surface represented by the mechanical organs of the block.

18. A block according to any one of claims 1, 14 through 17 **characterized in that** the immobilizing base (13) comprises at one end a fixed claw (20) engaging within the adjacent perforation of the plate, and is connected at its other extremity to a rotating, locking finger (21) with a protruding, fixed positioning element (25), said latter two elements cooperating with the adjacent perforation to provide lateral and longitudinal immobilization, followed by vertical locking.

19. A block according to the preceding claim **characterized in that** the fixed claw (2) and the locking finger (21) fasten in crosswise directions.

20. A block according to the preceding claim **characterized in that** the fixed claw (20) and the locking finger (21) fasten in longitudinal and transverse directions, respectively, in relation to the carrying structure (3).

21. A block according to any one of claims 18 through 20 **characterized in that** the fixed claw (20) is located beside the projection of upper branch 10.

22. A block according to claim 1 **characterized in that** its transverse immobilizing body (1) or (30) pivots on the immobilizing base (13) or (31) so it can be collapsed into an upright position perpendicular to the plane of carrying structure (3).

23. A block according to claim 1 **characterized in that** its transverse immobilizing body (1) or (30) pivots on the immobilizing base (13) or (31) so it can be removed and arranged in a row parallel to the direction of movement along the plane of the carrying structure (3).
